# FASCICULE DE BREVET EUROPEEN

(11) **EP 4 362 391 B1**
(45) Date de publication et mention de la délivrance du brevet: **30.04.2025**
(21) Numéro de dépôt: 22306611.9
(22) Date de dépôt: 24.10.2022
(51) Int. Cl.: H04L 9/40, G06F 21/62, G06F 21/31

(54) **PROCÉDÉ DE GESTION D'ACCÈS D'UN UTILISATEUR À AU MOINS UNE APPLICATION, PROGRAMME D'ORDINATEUR ET SYSTÈME ASSOCIÉS**
VERFAHREN ZUR VERWALTUNG DES ZUGRIFFS EINES BENUTZERS AUF MINDESTENS EINE ANWENDUNG, COMPUTERPROGRAMM UND SYSTEM DAFÜR
METHOD FOR MANAGING ACCESS OF A USER TO AT LEAST ONE APPLICATION, ASSOCIATED COMPUTER PROGRAM AND SYSTEM

(43) Date de publication de la demande: 01.05.2024
(73) Titulaire: BULL SAS, 78340 Les Clayes-Sous-Bois (FR)
(72) Inventeur: GUIONNEAU, Christophe, 38000 Grenoble (FR); DE SAINT STEBAN, Emmanuel, 38120 Saint Egrève (FR)
(74) Mandataire: IPAZ

(56) Documents cités:
- EP-A1- 3 440 862

## Description

### Domaine technique

La présente invention concerne un procédé de gestion d'accès d'un utilisateur à au moins une application.

L'invention concerne également un programme d'ordinateur et un système chacun configuré pour mettre en œuvre un tel procédé.

L'invention s'applique au domaine de la gestion de l'accès d'un utilisateur à une application hébergée sur un réseau de communication.

### État de la techniaue

Il est connu de recourir à des serveurs d'identités (en anglais, « *Identity Provider* ») mettant en œuvre des mécanismes d'authentification pour permettre à des utilisateurs d'accéder à des ressources disponibles sur un réseau.

De tels serveurs d'identités proposent généralement des fonctions de gouvernance des accès (en anglais, « *Identity Access Management* ») pour une attribution personnalisée, fonction de l'utilisateur ou du groupe d'utilisateurs, de droits d'accès auxdites ressources.

De telles ressources sont, par exemple, des application dites « *As A Service* » (ou logiciel en tant que service), hébergées sur internet. Selon un autre exemple, de telles ressources sont des applications dites « *on-premises* », c'est-à-dire hébergées sur un réseau de communication local.

Dans le cas d'un réseau local, le serveur d'identité est, de façon classique, hébergé au sein de ce réseau.

Toutefois, le serveur d'identité est également susceptible d'être externalisé en tant qu'application « *As A Service* », par exemple dans le *cloud,* formant ainsi un service de gestion des identités *As a Service* (IDAAS).

Un tel IDAAS est avantageux en ce qu'il permet d'affranchir les propriétaires du réseau local de la charge de la gestion des authentifications des utilisateurs.

Néanmoins, un tel IDAAS ne donne pas entière satisfaction.

En effet, le service IDAAS étant dans le *cloud,* il requiert une connexion permanente et fiable entre le réseau local et internet.

Toutefois, pour des raisons opérationnelles, le réseau local est susceptible d'être partiellement ou totalement déconnecté d'internet, pour des périodes parfois longues. C'est par exemple le cas si le réseau local est un réseau interne sur un navire, par exemple un navire marchand. Or, même si une connexion à l'IDAAS dans le *cloud* n'est pas possible, les utilisateurs doivent pouvoir continuer à accéder aux applications hébergées sur le réseau local, et ce en respectant les droits d'accès qui leurs sont attribués. En outre, il peut être nécessaire de modifier les droits d'accès lorsque le réseau local est déconnecté d'internet, par exemple lorsque le navire est en mer.

Un service IDAAS n'est donc pas adapté dans ce cas de figure.

Un but de la présente invention est de pallier cet inconvénient.

Un autre but de l'invention est donc de proposer un système de gestion d'accès qui bénéficie des avantages d'un IDAAS, et qui permette, quand le réseau local est déconnecté d'internet :
- aux utilisateurs d'accéder aux applications hébergées sur le réseau local, conformément aux droits d'accès qui leurs sont attribués ; et
- aux administrateurs de modifier les droits d'accès.

EP3440862A1 concerne un mécanisme de gestion d'accès.

### Exposé de l'invention

L'invention propose d'atteindre au moins un des buts précités par un procédé de gestion d'accès d'au moins un utilisateur à au moins une application, le procédé de gestion d'accès mettant en œuvre un module maître de gestion d'accès connecté à un premier réseau et configuré pour stocker des premières informations d'authentification de chaque utilisateur à chaque application, le procédé comportant, en réponse à une requête d'accès de l'utilisateur, sur un terminal utilisateur connecté à un deuxième réseau distinct du premier réseau, à une application locale hébergée sur un serveur d'application connecté audit deuxième réseau :
- si le deuxième réseau est connecté au premier réseau :
   - réception de la requête d'accès par le module maître ;
   - détermination, par le module maître, en fonction des premières informations d'authentification, de données de confirmation ou de refus d'accès de l'utilisateur à l'application locale ; et
   - transmission des données de confirmation ou de refus d'accès déterminées, du module maître vers le serveur d'application,
- sinon :
   - réception de la requête d'accès par un module satellite se trouvant dans le deuxième réseau et configuré pour stocker des deuxièmes informations d'authentification de chaque utilisateur à chaque application locale ;
   - détermination, par le module satellite, en fonction des deuxièmes informations d'authentification, de données de confirmation ou de refus d'accès de l'utilisateur à l'application locale ; et
transmission des données de confirmation ou de refus d'accès déterminées, depuis le module satellite vers le serveur d'application.

En effet, grâce au recours au module satellite se trouvant sur le deuxième réseau, les opérations d'authentification aux applications locales restent possibles pour les utilisateurs connectés audit deuxième réseau, même en cas de perte de connexion avec le premier réseau. En d'autres termes, pour les opérations d'authentification des utilisateurs connectés sur le deuxième réseau, et en cas d'inaccessibilité du module maître, le module satellite offre un service IDAAS, de sorte que l'utilisation des applications hébergées sur le serveur d'application connecté audit deuxième réseau reste possible.

En outre, la sollicitation en priorité du module maître, lorsque le deuxième réseau est connecté au premier réseau, offre les avantages du recours à un service IDAAS centralisé. Parmi ces avantages, il est possible de citer la mise en œuvre des informations d'authentification les plus récentes, modifiables de façon centralisée par un administrateur, ou encore le recours au l'authentification unique (SSO, de l'anglais « *Single Sign-On* ») pour toutes les applications, qu'elles soient hébergées sur le premier réseau ou sur le deuxième réseau.

Suivant d'autres aspects avantageux de l'invention, le procédé comporte une ou plusieurs des caractéristiques suivantes, prise(s) isolément ou suivant toutes les combinaisons techniquement possibles :
la requête d'accès est reçue par le module maître depuis le module satellite ;
les données de confirmation ou de refus d'accès déterminées par le module maître sont transmises vers le serveur d'application par le module satellite ;
le procédé de gestion d'accès comporte, en réponse à une requête d'accès de l'utilisateur, sur le terminal utilisateur connecté au deuxième réseau, à une application distante hébergée sur un serveur d'application connecté au premier réseau :
   - réception de la requête d'accès par le module maître depuis le deuxième réseau ;
   - détermination, par le module maître, en fonction des premières informations d'authentification relatives à l'utilisateur, de données de confirmation ou de refus d'accès de l'utilisateur à l'application distante ; et
   - transmission des données de confirmation ou de refus d'accès déterminées au serveur d'application hébergeant l'application distante ;
le procédé de gestion d'accès comporte, en outre, en réponse à une requête d'accès de l'utilisateur, sur le terminal utilisateur connecté au deuxième réseau, à une application externe hébergée sur un serveur d'application connecté à un troisième réseau distinct du premier réseau et du deuxième réseau :
   - réception de la requête d'accès par le module maître depuis le deuxième réseau ;
   - détermination, par le module maître, en fonction des premières informations d'authentification relatives à l'utilisateur, de données de confirmation ou de refus d'accès de l'utilisateur à l'application externe ; et
   - transmission des données de confirmation ou de refus d'accès déterminées, depuis le module maître vers le serveur d'application hébergeant l'application externe ;
le module maître est configuré pour stocker des règles d'harmonisation, le module satellite étant configuré pour, lors d'une connexion du deuxième réseau au premier réseau, transmettre les deuxièmes informations d'authentification correspondantes au module maître, le module maître étant, en outre, configuré pour :
   - comparer les deuxièmes informations d'authentification reçues aux premières informations d'authentification courantes ;
   - en fonction d'un résultat de la comparaison et des règles d'harmonisation :
      - mettre à jour au moins une partie des premières informations d'authentification ; et/ou
      - pour au moins un module satellite, délivrer des instructions de mise à jour des deuxièmes informations d'authentification ;
le module maître est configuré pour, en réponse à une commande de modification des premières informations d'authentification, et lorsque la modification concerne une application locale hébergée sur un serveur d'application connecté au deuxième réseau, délivrer des instructions de mise à jour des deuxièmes informations d'authentification correspondantes ;
le module maître et le module satellite sont configurés pour chacun afficher, à destination d'un utilisateur pourvu de droits spécifiques, une interface de gestion respective sur le terminal utilisateur correspondant, le module satellite étant, en outre, configuré pour rediriger l'utilisateur vers l'interface de gestion du module maître si le deuxième réseau est connecté au premier réseau ;
le module maître et le module satellite sont configurés pour communiquer entre eux en mettant en œuvre un protocole de cryptage.

En outre, l'invention a pour objet un produit programme d'ordinateur comprenant des instructions, qui lorsqu'elles sont exécutées par ordinateur, mettent en œuvre les étapes du procédé tel que défini ci-dessus.

Le programme d'ordinateur peut être codé dans tout langage informatique adéquat, par exemple en C, C++, JAVA, Python, etc.

En outre, l'invention a pour objet un système de gestion d'accès d'au moins un utilisateur à au moins une application, le système de gestion d'accès comprenant :
- un module maître de gestion d'accès connecté à un premier réseau et configuré pour stocker des premières informations d'authentification de chaque utilisateur à chaque application ; et
- un module satellite de gestion d'accès se trouvant dans un deuxième réseau distinct du premier réseau, et configuré pour stocker des deuxièmes informations d'authentification de chaque utilisateur à chaque application locale hébergée sur un serveur d'application connecté audit deuxième réseau,

le module maître et le module satellite étant configurés de sorte que, en réponse à une requête d'accès de l'utilisateur, sur un terminal utilisateur connecté au deuxième réseau, à une application locale :
   - si le deuxième réseau est connecté au premier réseau, le module maître :
      - reçoive la requête d'accès ;
      - détermine, en fonction des premières informations d'authentification, des données de confirmation ou de refus d'accès de l'utilisateur à l'application locale ; et
      - transmette, vers le serveur d'application, les données de confirmation ou de refus d'accès déterminées,
   - si le deuxième réseau n'est pas connecté au premier réseau, le module satellite :
      - reçoive la requête d'accès ;
      - détermine, en fonction des deuxièmes informations d'authentification, des données de confirmation ou de refus d'accès de l'utilisateur à l'application locale ; et
      - transmette, vers le serveur d'application, les données de confirmation ou de refus d'accès déterminées.

### Brève description des dessins

L'invention sera mieux comprise à l'aide de la description qui va suivre, donnée uniquement à titre d'exemple non limitatif et faite en se référant aux dessins annexés sur lesquels :
- la figure 1 est une représentation schématique d'un système de gestion d'accès selon l'invention, dans une situation où un premier et un deuxième réseau de communication sont connectés entre eux ;
- la figure 2 est une représentation schématique du système de la figure 1, dans une situation où le deuxième réseau n'est pas connecté au premier réseau ;
- la figure 3 est une représentation schématique du système de la figure 1, dans une situation où une application cible est hébergée sur le premier réseau de communication ; et
- la figure 4 est une représentation schématique du système de la figure 1, dans une situation où une application cible est hébergée sur un réseau distinct du premier réseau et du deuxième réseau auquel le terminal utilisateur est connecté.

### Description détaillée

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique, de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs figures conservent la même référence.

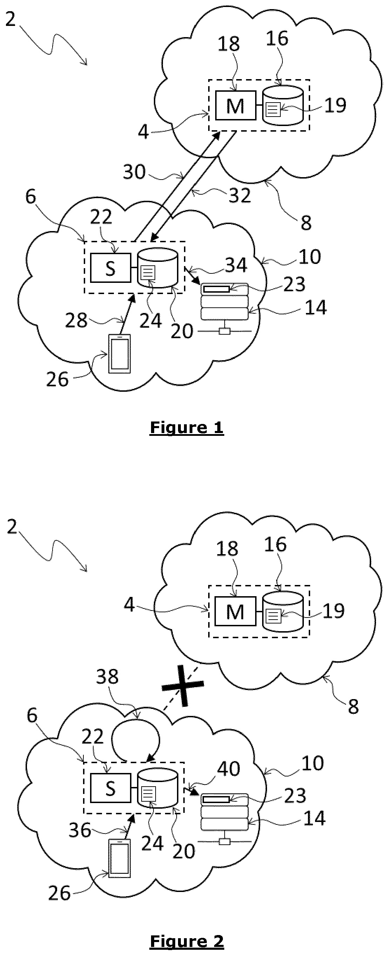

Un système de gestion d'accès 2 selon l'invention est illustré par les figures 1 à 4.

Le système de gestion d'accès 2 est destiné à gérer l'accès à des applications hébergées sur des serveurs applicatifs connectés à internet ou à un ou plusieurs réseaux locaux.

Le système de gestion d'accès 2 comprend un module maître 4 de gestion d'accès (également appelé « module maître »), et au moins un module satellite 6 de gestion d'accès (également appelé « module satellite »).

Le module maître 4 est connecté à un premier réseau 8 de communication, en particulier connecté à internet. En outre, le module satellite 6 est connecté à un deuxième réseau 10 de communication, tel qu'un réseau local, par exemple un réseau local d'un navire ou d'une entreprise.

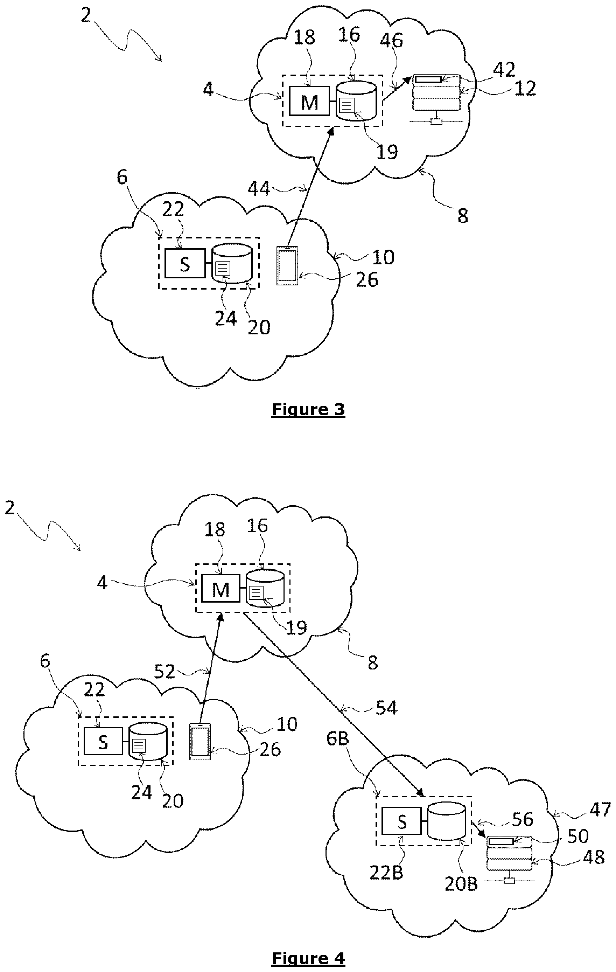

Comme illustré par la figure 3, un premier serveur d'application 12 est, de préférence, connecté, au premier réseau 8 est connecté. En outre, un deuxième serveur d'application 14 est connecté au deuxième réseau 10.

Une brève description du module maître 4 et d'un module satellite 6 va maintenant être fournie, préalablement à une description plus détaillée de leur configuration.

### Module maître 4

Le module maître 4 comprend une première mémoire 16 et une première unité de commande 18 connectées entre elles.

La première mémoire 16 est configurée pour stocker des premières informations d'authentification.

En outre, la première unité de commande 18 est configurée pour déterminer des données de confirmation ou de refus d'accès de chaque utilisateur à chaque application, en fonction des premières informations d'authentification stockées dans la première mémoire 16.

De telles données de confirmation ou de refus d'accès présentent un format dépendant du protocole d'authentification choisi. Par exemple, les données de confirmation ou de refus d'accès sont telles que définies par le standard informatique SAML (de l'anglais « *Security Assertion Markup Language* », pour langage de balisage d'assertion de sécurité). Selon un autre exemple, les données de confirmation ou de refus d'accès sont telles que définies par le protocole libre connu sous l'appellation « *OAuth* », ou tout autre protocole ou jeton sécurisé permettant de transmettre une preuve d'authentification de l'utilisateur.

Les premières informations d'authentification sont représentatives de l'ensemble de la configuration du système de gestion d'accès 2, c'est-à-dire de relatives à l'accès à chaque application, qu'elle soit hébergée sur le premier serveur d'application 12 ou le deuxième serveur d'application 14.

De préférence, les premières informations d'authentification comportent une liste 19 d'utilisateurs (et/ou de groupes d'utilisateurs). En outre, pour chaque application, chaque utilisateur est associé à au moins une méthode d'authentification.

Par exemple, une telle méthode d'authentification est une authentification par carte à puce (certificat défini par la norme X.509), ou encore une authentification par mot de passe et code OTP (de l'anglais « *one time password* », pour mot de passe à usage unique) généré par une application sur téléphone mobile (sans connexion).

De préférence, les premières informations d'authentification sont également représentatives d'une politique d'authentification. La politique d'authentification est indicative de conditions pour la réalisation de l'authentifications des utilisateurs. Par exemple, la politique d'authentification comporte la contrainte suivante : « l'utilisateur X a droit à l'application Y s'il est authentifié avec la méthode Z, dans un créneau horaire H, depuis adresse IP I ».

De façon avantageuse, les méthodes d'authentification sont multiples, et la politique d'authentification est choisie de sorte qu'un utilisateur puisse s'authentifier dans différents scénarii et selon différents niveaux d'authentification. À titre d'exemple, la politique d'authentification est suffisamment diversifiée pour prendre en compte des authentifications en mode connecté (le terminal utilisateur est connecté à internet et peut, par exemple, recevoir des données d'authentifications fournies par un serveur, dites « *push* ») ou non connecté (le terminal utilisateur n'est pas connecté à internet et seule une authentification par mot de passe à usage unique est possible).

De préférence encore, les premières informations d'authentification comportent des données de configuration du système. De telles données de configuration comprennent, notamment, des paramètres liés aux applications, tels que le nom et/ou la description des applications, des URLs de connexion aux applications, des URLs de déconnexion (en particulier dans le cas de la déconnexion globale, ou « *Single Logout* ») ou d'autres informations comme les attributs des utilisateurs à fournir à chaque application, etc. De telles informations sont, par exemple, destinées à ajouter les noms/descriptions des applications locales dans une interface d'accueil de l'utilisateur (décrite ultérieurement) ou pour effectuer une déconnexion globale de l'utilisateur.

Comme mentionné précédemment, la première unité de commande 18 est configurée pour déterminer les données de confirmation ou de refus d'accès de chaque utilisateur à chaque application. En particulier, la première unité de commande 18 est configurée pour déterminer les données de confirmation ou de refus d'accès de chaque utilisateur à :
- chaque application hébergée sur le premier serveur d'application 12 connecté au premier réseau 8 ; et/ou
- chaque application hébergée sur le deuxième serveur d'application 14 connecté au deuxième réseau 10, lorsque le deuxième réseau 10 est connecté au premier réseau 8.

### Module satellite 6

Le module satellite 6 comprend une deuxième mémoire 20 et une deuxième unité de commande 22 connectées entre elles.

La deuxième mémoire 20 est configurée pour stocker des deuxièmes informations d'authentification, relatives à l'accès à chaque application hébergée sur le deuxième serveur d'application 14 connecté au même deuxième réseau 10 que le module satellite 6 (encore appelée « application locale 23 »).

De préférence, les deuxièmes informations d'authentification comportent une sous-liste 24 de la liste 19 d'utilisateurs stockée dans la première mémoire 16. En outre, pour chaque application locale, chaque utilisateur de la sous-liste 24 est associé à au moins une méthode d'authentification.

De préférence, les deuxièmes informations d'authentification sont également représentatives d'une politique d'authentification. Une telle politique d'authentification est indicative de conditions pour la réalisation de l'authentifications des utilisateurs de la sous-liste 24 aux applications locales 23.

De préférence encore, les deuxièmes informations d'authentification comportent des données de configuration comprenant, notamment, des paramètres liés aux applications locales, tels que le nom et/ou la description des applications locales, des URLs de connexion aux applications locales, des URLs de déconnexion (en particulier, dans le cas de la déconnexion globale) ou d'autres informations comme les attributs des utilisateurs à fournir à chaque application locale, etc. De telles informations sont, par exemple, destinées à ajouter les noms/descriptions des applications locales dans une interface d'accueil de l'utilisateur (décrite ultérieurement) ou pour effectuer une déconnexion globale de l'utilisateur.

Avantageusement, dans un souci d'harmonisation, et comme cela sera décrit ultérieurement, les deuxièmes informations d'authentification sont également stockées dans la première mémoire 16, de préférence associées à une étiquette représentative du module satellite 6 et/ou de l'application locale 23 correspondant(e).

La deuxième unité de commande 22 est configurée pour déterminer des données de confirmation ou de refus d'accès de chaque utilisateur à chaque application locale 23, en fonction des deuxièmes informations d'authentification stockées dans la deuxième mémoire 20.

De préférence, la deuxième unité de commande 22 est également configurée pour communiquer avec la première unité de commande 18.

Avantageusement, la deuxième unité de commande 22 et la première unité de commande 18 sont configurées pour communiquer entre elles en mettant en œuvre un protocole de cryptage, c'est-à-dire un chiffrement de données.

La mise en œuvre d'un tel chiffrement est avantageuse, dans la mesure où elle assure une continuité de sécurité entre l'utilisateur et l'application cible.

Par exemple, pour chaque module satellite 6, une clé privée et une clé publique sont définies par un administrateur lors d'une initialisation de chaque module satellite 6. Dans ce cas, la clé privée et la clé publique sont utilisées pour le chiffrement et la signature de données échangées entre le module satellite 6 et le module maître 4.

Selon un autre exemple, un tel chiffrement repose sur la mise en œuvre d'un protocole de transfert hypertextuel sécurisé (ou HTTPS, pour « *HyperText Transfer Protocol Secure* ») et de certificats correspondants.

Par « administrateur », il est entendu, au sens de la présente invention, un utilisateur pourvu de droits spécifiques, en particulier des droits d'administrateur.

L'un au moins du module maître 4 et du module satellite 6 est susceptible de se présenter sous une forme matérielle, tel qu'un ordinateur, un serveur, un processeur, une puce électronique, etc. Alternativement, ou de façon additionnelle, l'un au moins du module maître 4 et du module satellite 6 est susceptible de se présenter sous une forme logicielle tel qu'un programme d'ordinateur, ou une application, par exemple une application pour un appareil utilisateur de type tablette ou Smartphone.

En outre, au moins une unité de commande 18, 22 est une unité de commande matérielle, tel qu'un processeur, une puce électronique, un calculateur, un ordinateur, un serveur, etc. Alternativement, ou de façon additionnelle, au moins une unité de commande 18, 22 est une unité de commande logicielle, tel qu'une application, un programme d'ordinateur, une machine virtuelle, etc.

D'autres caractéristiques du système 2 de gestion d'accès seront mieux comprises à la lecture de la description qui va suivre, faite en référence aux figures 1 à 4 successivement.

### Accès à une application locale : deuxième réseau connecté au premier réseau

La figure 1 correspond à une situation où le deuxième réseau 10 est connecté au premier réseau 8.

Dans la situation illustrée par la figure 1, un utilisateur émet, via un terminal utilisateur 26 connecté au deuxième réseau 10, une requête d'accès à une application locale 23, hébergée sur le deuxième serveur d'application 14 connecté audit deuxième réseau 10.

Le module maître 4 et le module satellite 6 sont configurés de sorte que, en réponse à la requête d'accès de l'utilisateur, la première unité de commande 18 du module maître 4 reçoive la requête d'accès.

Avantageusement, la deuxième unité de commande 22 du module satellite 6 est configurée pour d'abord recevoir la requête d'accès émise depuis le terminal utilisateur 26 (flèche 28), et pour transmettre la requête reçue au module maître 4 (flèche 30).

Ceci est avantageux. En effet, bien que le terminal utilisateur (généralement un navigateur web) ne connaisse pas l'état de connexion du deuxième réseau avec le module maître 4, le module satellite 6 la connaît. En outre, le module satellite 6 étant sur le même deuxième réseau que l'utilisateur, le module satellite 6 est connu et joignable à tout moment. Par conséquent, le module satellite 6 est apte à effectuer une redirection ou non vers le module maître 4, de manière transparente pour l'utilisateur.

En outre, conformément à ce qui a été décrit précédemment, la première unité de commande 18 du module maître 4 est configurée pour déterminer, en fonction des premières informations d'authentification stockées dans la première mémoire 16, des données de confirmation ou de refus d'accès de l'utilisateur à l'application locale 23. Ceci est possible du fait que les premières informations d'authentification sont relatives à l'accès à chaque application, qu'elle soit hébergée sur le premier serveur d'application 12 ou le deuxième serveur d'application 14.

La première unité de commande 18 est également configurée pour transmettre les données de confirmation ou de refus d'accès déterminées vers le deuxième serveur d'application 14.

Avantageusement, la deuxième unité de commande 22 du module satellite 6 est configurée pour d'abord recevoir les données de confirmation ou de refus d'accès déterminées émises par le module maître 4 (flèche 32), et pour les transmettre au deuxième serveur d'application 14 (flèche 34).

La transmission des données de confirmation ou de refus d'accès depuis la deuxième unité de commande 22 du module satellite 6 vers le deuxième serveur d'application 14 est avantageuse, dans la mesure où elle autorise de paramétrer chaque application locale pour communiquer avec une unique unité de commande, en l'occurrence la deuxième unité de commande 22.

### Accès à une application locale : deuxième réseau déconnecté du premier réseau

La figure 2 correspond à une situation où le deuxième réseau 10 n'est pas connecté au premier réseau 8.

Dans la situation illustrée par la figure 2, un utilisateur émet, via le terminal utilisateur 26 connecté au deuxième réseau 10, une requête d'accès à une application locale 23, hébergée sur le deuxième serveur d'application 14 connecté audit deuxième réseau 10.

Le module satellite 6 est configuré de sorte que, en réponse à la requête d'accès de l'utilisateur, et quand le deuxième réseau 10 n'est pas connecté au premier réseau 8, la deuxième unité de commande 22 du module satellite 6 reçoive la requête d'accès (flèche 36).

La deuxième unité de commande 22 est également configurée pour, dans ce cas, déterminer des données de confirmation ou de refus d'accès de l'utilisateur à l'application locale 23, en fonction des deuxièmes informations d'authentification stockées dans la deuxième mémoire 20 (flèche 38).

En outre, la deuxième unité de commande 22 est configurée pour transmettre les données de confirmation ou de refus d'accès qu'elle a déterminées vers le deuxième serveur d'application 14 (flèche 40).

De préférence, lorsqu'une connexion n'est pas établie entre le module satellite 6 et le module maître 4, par exemple lorsque le deuxième réseau 10 a été déconnecté du premier réseau 8, la deuxième unité de commande 22 est configurée pour réaliser, successivement dans le temps, une tentative de connexion au module maître 4.

Ceci permet une conformité avec les règles de sécurité réseau classiques, qui interdisent les connexions entrantes (c'est-à-dire provenant de l'extérieur d'un réseau local), mais autorisent les connexions sortantes (par exemple vers internet) sont autorisées. Les modules satellites 6 sont, de cette façon, aptes à rétablir une connexion avec le module maître 4, faculté dont ledit module maître 4 est dépourvu.

### Accès à une application distante

La figure 3 correspond également à un fonctionnement avantageux du système de gestion d'accès 2, dans une situation où le deuxième réseau 10 est connecté au premier réseau 8.

Dans la situation illustrée par la figure 3, un utilisateur émet, via le terminal utilisateur 26 connecté au deuxième réseau 10, une requête d'accès à une application hébergée sur le premier serveur d'application 12 connecté au premier réseau 8, dite application distante 42. Du point de vue de l'utilisateur, une telle application distante 42 est une application SaaS.

Le module maître 4 est configuré pour, dans ce cas, recevoir la requête d'accès depuis le deuxième réseau 10, de préférence directement depuis le terminal utilisateur 26 (flèche 44).

Ceci est avantageux, dans la mesure où l'application distance n'est pas configurée pour interagir, en vue d'une authentification, avec le module satellite 6 connecté au même réseau que le terminal utilisateur 26, mais uniquement avec le module maître 4.

En outre, la première unité de commande 18 du module maître 4 est configurée pour déterminer, en fonction des premières informations d'authentification relatives à l'utilisateur, des données de confirmation ou de refus d'accès de l'utilisateur à l'application distante 42.

Le module maître 4 est également configuré pour transmettre les données de confirmation ou de refus d'accès déterminées au premier serveur d'application 12 hébergeant l'application distante 42 (flèche 46).

### Accès à une application externe

La figure 4 correspond également à un fonctionnement avantageux du système de gestion d'accès 2, dans une situation où le deuxième réseau 10 est connecté au premier réseau 8. En outre, un troisième réseau 47 distant, distinct du premier réseau 8 et du deuxième réseau 10, est également connecté au premier réseau 8.

Comme illustré par la figure 4, un troisième serveur d'application 48 est connecté au troisième réseau 47, et héberge au moins une application, dite application externe 50. En outre, un module satellite externe 6B, similaire au module satellite 6 connecté au deuxième réseau 10, est connecté au troisième réseau 47. Le module satellite externe 6B comprend une deuxième mémoire 20B et une deuxième unité de commande 22B en communication entre elles.

Dans la situation représentée sur cette figure 4, un utilisateur émet, via le terminal utilisateur 26 connecté au deuxième réseau 10, une requête d'accès à l'application externe 50 hébergée sur le troisième réseau 47.

Le module maître 4 est configuré pour, dans ce cas, recevoir la requête d'accès depuis le deuxième réseau 10, de préférence directement depuis le terminal utilisateur 26 (flèche 52).

Ceci est avantageux, dans la mesure où l'application externe n'est pas configurée pour interagir, en vue d'une authentification, avec le module satellite 6 connecté au même réseau que le terminal utilisateur 26, mais uniquement avec le module maître 4.

En outre, la première unité de commande 18 du module maître 4 est configurée pour déterminer, en fonction des premières informations d'authentification relatives à l'utilisateur et stockées dans la première mémoire 16, des données de confirmation ou de refus d'accès de l'utilisateur à l'application externe 50.

La première unité de commande 18 est également configurée pour transmettre les données de confirmation ou de refus d'accès déterminées vers le troisième serveur d'application 48.

Avantageusement, la deuxième unité de commande 22B du module satellite externe 6B est configurée pour d'abord recevoir les données de confirmation ou de refus d'accès déterminées émises par le module maître 4 (flèche 54), et pour transmettre les données de confirmation ou de refus d'accès reçues au troisième serveur d'application 48 (flèche 56).

La transmission des données de confirmation ou de refus d'accès depuis la deuxième unité de commande 22B du module satellite externe 6B vers le troisième serveur d'application 48 est avantageuse, dans la mesure où elle autorise de paramétrer chaque application externe 50 pour communiquer avec une unique unité de commande, en l'occurrence la deuxième unité de commande 22B du module satellite externe 6B.

### Modifications au niveau du module maître

De préférence, outre la détermination de données de confirmation ou de refus d'accès, le module maître 4 est également configuré pour commander une modification des deuxièmes informations d'authentification stockées dans chaque module satellite 6.

En particulier, le module maître 4 est apte à recevoir une commande de modification des premières informations d'authentification, par exemple de la part d'un administrateur. Une telle commande est, par exemple, destinée à modifier des droits d'accès d'un utilisateur à une application, ou encore à modifier une configuration d'un module satellite. Une telle commande est également susceptible de servie à initialiser le système de gestion d'accès 2.

Dans ce cas, lorsque la modification concerne une information d'authentification associée à une étiquette correspondant à une module satellite 6 (par exemple une modification concernant une application locale 23 hébergée sur le deuxième serveur d'application 14 connecté au deuxième réseau 10), le module maître 4 est avantageusement configuré pour délivrer, à destination du module satellite 6, des instructions de mise à jour des deuxièmes informations d'authentification correspondantes.

Ceci est avantageux, dans la mesure où une modification des deuxièmes informations d'authentification de chaque module satellite 6 est susceptible d'être réalisée de façon centralisée, au niveau du module maître 4, qui est configuré pour répercuter lesdites modifications sur le(s) module(s) satellite(s) 6 adéquat(s).

Selon un mode de réalisation, pour effectuer une telle mise à jour, la première unité de commande 18 est configurée pour déterminer si la commande de modification se rapporte à un module satellite 6, en particulier sur la base des étiquettes associées aux premières informations à modifier.

La première unité de commande 18 est également configurée pour, le cas échéant, générer des instructions de mise à jour à destination du module satellite 6 approprié. De telles instructions comprennent des valeurs de remplacement de toute ou partie des deuxièmes informations d'authentification courantes, et/ou des valeurs additionnelles venant compléter les deuxièmes informations d'authentification stockées dans la deuxième mémoire 20 dudit module satellite.

De préférence, les instructions de mise à jour sont horodatées. Les instructions de mise à jour sont également susceptibles de comprendre une séquence de redémarrage, potentiellement requise pour la bonne prise en compte, par le module satellite 6, des modifications requises par les instructions de mise à jour.

Le module satellite 6 est, dans ce cas, configuré pour appliquer les instructions de mise à jour dans l'ordre de l'horodatage, ainsi que la séquence de redémarrage. Un tel horodatage est, par conséquent, avantageux, dans la mesure où il autorise de maintenir un ordre même avec plusieurs plateformes (par exemple plusieurs serveurs assurant la redondance du module maître).

### Modifications au niveau du module satellite

De préférence, la deuxième unité de commande 22 est également configurée pour, lors du rétablissement d'une connexion entre le deuxième réseau 10 et le premier réseau 8, transmettre tout ou partie des deuxièmes informations d'authentification courantes stockées dans la deuxième mémoire 20 au module maître 4.

En particulier, la deuxième unité de commande 22 est configurée générer une file d'attente contenant la partie des deuxièmes informations d'authentification qui a subi des modifications depuis la dernière déconnexion entre le deuxième réseau 10 et le premier réseau 8, et pour transmettre la file d'attente au module maître 4.

De telles modifications sont des modifications effectuées par un administrateur (par exemple, des modifications de droits des utilisateurs ou de leurs mots de passe, des modifications de configuration du module satellite), ou encore des modifications effectuées par un utilisateur lui-même (par exemple, des modifications de mot de passe ou de profils). De telles modifications sont également susceptibles de comprendre des logs de connexion des utilisateurs (dates, sessions, erreurs etc.).

Avantageusement, la première mémoire 16 est également configurée pour stocker des règles d'harmonisation. De telles règles d'harmonisation sont représentatives d'une décision à prendre en cas de disparités entre les deuxièmes informations d'authentification de la file d'attente reçue depuis le module satellite 6 et la partie correspondante des premières informations d'authentification stockée dans le module maître.

La première unité de commande 18 est configurée pour comparer les deuxièmes informations d'authentification reçues dans la file d'attente aux premières informations d'authentification courantes correspondantes.

La première unité de commande 18 est également configurée pour, en fonction d'un résultat de la comparaison et des règles d'harmonisation :
- mettre à jour au moins une partie des premières informations d'authentification ; et/ou
- pour au moins un module satellite 6, délivrer des instructions de mise à jour des deuxièmes informations d'authentification.

Par exemple, la première unité de commande 18 est configurée pour, en cas de détection des différences à l'issue de la comparaison, déterminer, en fonction des règles d'harmonisation, si les informations d'authentification différentes sont à conserver, ignorer ou modifier.

Concernant les informations à conserver, la première unité de commande 18 est configurée pour les écrire dans la première mémoire 16.

Concernant les informations à modifier, la première unité de commande 18 est également configurée pour générer, à destination du module satellite 6, des instructions de mise à jour correspondantes.

De telles instructions de mise à jour se rapportent à des valeurs de remplacement pour tout ou partie des deuxièmes informations d'authentification, ou encore à de nouvelles deuxièmes informations d'authentification.

De préférence, les instructions de mise à jour sont horodatées. Les instructions de mise à jour sont également susceptibles de comprendre une séquence de redémarrage, potentiellement requise pour la prise en compte des modifications par le module satellite 6.

Le module satellite 6 est, dans ce cas, configuré pour appliquer instructions de mise à jour dans l'ordre de l'horodatage, ainsi que la séquence de redémarrage.

Un tel fonctionnement est avantageux dans la mesure où, dans l'intervalle de temps pendant lequel le deuxième 10 réseau n'est pas connecté au premier réseau 8, un administrateur est susceptible d'intervenir au niveau du module satellite 6 correspondant pour modifier les deuxièmes informations d'authentification stockées dans sa deuxième mémoire 20. De telles modifications sont susceptibles d'entrer en conflit avec les premières informations d'authentification stockées au niveau du module maître. La mise en œuvre de telles règles d'harmonisation autorise la résolution de tels conflits.

De préférence, si lors d'une reconnexion du deuxième réseau 10 au premier réseau 8, le module satellite 6 reçoit des instructions de mise à jour alors que sa file d'attente n'est pas vide (ce qui correspond à une situation où, dans l'intervalle de temps pendant lequel le deuxième 10 réseau n'était pas connecté au premier réseau 8, des modifications ont été effectuées à la fois dans les premières informations d'authentification du module maître et dans les deuxièmes informations d'authentification du module satellite 6), le module satellite 6 est configuré pour :
- stocker la file d'attente correspondante ;
- appliquer les instructions de de mise à jour reçues depuis le module maître 4 ; et
- transmettre la file d'attente stockée au module maître 4.

Dans ce cas, le module maître 4 est configuré pour mettre en œuvre la résolution de conflit décrite précédemment, sur la base des deuxièmes informations d'authentification modifiées dans la file d'attente reçue depuis le module satellite 6.

### Interface administrateur

De préférence, le module maître 4 est configuré pour afficher, à destination d'un administrateur, une interface de gestion respective sur le terminal utilisateur correspondant.

De préférence, le module satellite 6 est également configuré pour afficher, à destination d'un utilisateur pourvu de droits spécifiques (en particulier des droits d'administrateur), une interface de gestion respective sur le terminal utilisateur correspondant.

Dans ce cas, le module satellite 6 est, en outre, avantageusement configuré pour rediriger l'utilisateur vers l'interface de gestion du module maître si le deuxième réseau est connecté au premier réseau.

Chacune de ces interfaces est, par exemple, une interface web.

En résumé, la caractéristique selon laquelle la requête d'accès est reçue par le module maître depuis le module satellite est avantageuse dans la mesure où le terminal utilisateur ne connaît généralement pas l'état de connexion du deuxième réseau avec le module maître 4, alors le module satellite 6 la connaît. En outre, le module satellite 6 étant sur le même deuxième réseau que l'utilisateur, le module satellite 6 est connu et joignable à tout moment. Par conséquent, le module satellite 6 est apte à effectuer une redirection ou non vers le module maître 4, de manière transparente pour l'utilisateur.

La caractéristique selon laquelle les données de confirmation ou de refus d'accès déterminées par le module maître sont transmises vers le serveur d'application par le module satellite est avantageuse, dans la mesure où elle autorise un paramétrage chaque application locale pour qu'elle communique avec une unique unité de commande, en l'occurrence la deuxième unité de commande 22 du module satellite 6 du même réseau.

L'invention, selon le mode de réalisation décrit en relation à la figure 3, est également avantageuse dans la mesure où elle autorise l'utilisateur, sur le terminal utilisateur connecté au deuxième réseau, à accéder à une application distante hébergée sur un serveur d'application connecté au premier réseau.

L'invention, selon le mode de réalisation décrit en relation à la figure 4, est également avantageuse, dans la mesure où elle autorise l'utilisateur, sur le terminal utilisateur connecté au deuxième réseau, à accéder à une application externe hébergée sur un serveur d'application connecté à un troisième réseau distinct du premier réseau et du deuxième réseau.

La caractéristique selon laquelle le module maître est configuré pour stocker des règles d'harmonisation est avantageuse, dans la mesure où de telles règles d'harmonisation autorisent la résolution de conflits nés d'éventuelles modifications des deuxièmes informations d'authentification dans un intervalle de temps pendant lequel le deuxième 10 réseau n'est pas connecté au premier réseau 8.

La caractéristique selon laquelle le module maître est configuré pour, en réponse à une commande de modification des premières informations d'authentification, délivrer des instructions de mise à jour des deuxièmes informations d'authentification est avantageuse, dans la mesure où une modification des deuxièmes informations d'authentification de chaque module satellite 6 est susceptible d'être réalisée de façon centralisée, au niveau du module maître 4, qui est configuré pour répercuter lesdites modifications sur le(s) module(s) satellite(s) 6 adéquat(s).

La caractéristique selon laquelle le module satellite est configuré pour rediriger l'utilisateur vers l'interface de gestion du module maître si le deuxième réseau est connecté au premier réseau est avantageuse, dans la mesure où elle amène un administrateur à effectuer des modifications des deuxièmes informations d'authentification de chaque module satellite 6 de façon centralisée, au niveau du module maître 4.

La caractéristique selon laquelle le module maître et le module satellite sont configurés pour communiquer entre eux en mettant en œuvre un protocole de cryptage est avantageuse, dans la mesure où elle assure une continuité de sécurité entre l'utilisateur et l'application cible.

### Fonctionnement

Le fonctionnement du système 2 de gestion d'accès va maintenant être décrit, en référence aux figures 1 à 4.

Au cours d'une étape d'initialisation, un administrateur accède au module maître, via une interface administrateur dédiée, et saisit les premières informations d'authentification.

Ces premières informations d'authentification se rapportent à la configuration du module maître 4, ainsi qu'à l'ensemble des modules satellites 6 et des applications locales 23, distantes 42 et externes 50.

Puis, en fonction des premières informations d'authentification saisies par l'administrateur, le module maître 4 adresse, à chaque module satellite 6, des instructions de mise à jour des deuxièmes informations d'authentification correspondantes. En particulier, à cette étape, une telle mise à jour est une initialisation.

Puis, en fonction des instructions de mise à jour reçues, chaque module satellite 6 modifie (en l'occurrence initialise) les deuxièmes informations d'authentification correspondantes.

De préférence, au cours d'une telle étape d'initialisation, l'administrateur définit, pour chaque module satellite 6, les clés privée et publique mentionnées précédemment.

Une fois le système 2 de gestion d'accès configuré, un utilisateur émet, via un terminal utilisateur 26 connecté au deuxième réseau 10, une requête d'accès à une application. Par exemple, une telle requête est émise en sélectionnant l'application sur une interface d'accueil accessible à l'utilisateur à travers son terminal utilisateur 26.

À titre d'exemple, le module satellite 6 connecté audit deuxième réseau 10 propose ladite interface d'accueil listant, pour chaque utilisateur, les applications qui lui sont autorisées et/ou celles qui sont joignables depuis le deuxième réseau 10, en fonction de l'état de connexion du deuxième réseau au premier réseau 8.

Alternativement, ou de façon complémentaire, le module maître 4 propose ladite interface d'accueil listant, pour chaque utilisateur, les applications qui lui sont autorisées et/ou celles qui sont joignables depuis internet, les applications SaaS et celle des différents troisièmes réseaux en fonction de l'état de connexion du deuxième réseau 10 au premier réseau 8.

Si l'utilisateur émet une requête d'accès à une application locale 23, hébergée sur le deuxième serveur d'application 14 connecté au deuxième réseau 10, et si le deuxième réseau 10 est connecté au premier réseau 8, alors la première unité de commande 18 du module maître 4 reçoit la requête d'accès.

Puis, la première unité de commande 18 du module maître 4 détermine, en fonction des premières informations d'authentification stockées dans la première mémoire 16, des données de confirmation ou de refus d'accès de l'utilisateur à l'application locale 23.

Puis, la première unité de commande 18 transmet les données de confirmation ou de refus d'accès déterminées vers le deuxième serveur d'application 14.

Si l'utilisateur émet une requête d'accès à une application locale 23, hébergée sur le deuxième serveur d'application 14 connecté au deuxième réseau 10, et si le deuxième réseau 10 n'est pas connecté au premier réseau 8, alors la deuxième unité de commande 22 du module satellite 6 reçoit la requête d'accès.

Puis, la deuxième unité de commande 22 détermine, en fonction des deuxièmes informations d'authentification stockées dans la deuxième mémoire 20, des données de confirmation ou de refus d'accès de l'utilisateur à l'application locale 23.

Puis, la deuxième unité de commande 22 transmet les données de confirmation ou de refus d'accès qu'elle a déterminées vers le deuxième serveur d'application 14.

De préférence, tant que le deuxième réseau 10 n'est pas connecté au premier réseau 8, la deuxième unité de commande 22 génère une file d'attente contenant les modifications subies par les deuxièmes informations d'authentification depuis la dernière déconnexion entre le deuxième réseau 10 et le premier réseau 8.

De préférence, lors du rétablissement d'une connexion entre le deuxième réseau 10 et le premier réseau 8, la deuxième unité de commande 22 transmet tout ou partie des deuxièmes informations d'authentification courantes stockées dans la deuxième mémoire 20 au module maître 4, en particulier transmet la file d'attente.

Puis, la première unité de commande 18 compare les deuxièmes informations d'authentification reçues dans la file d'attente aux premières informations d'authentification courantes correspondantes.

Puis, en fonction d'un résultat de la comparaison et des règles d'harmonisation stockées dans la première mémoire 16, la première unité de commande 18 :
- met à jour au moins une partie des premières informations d'authentification ; et/ou
- délivre, à destination du module satellite 6, des instructions de mise à jour des deuxièmes informations d'authentification associées.

Puis, le module satellite 6 exécute les instructions de mise à jour reçues pour modifier les deuxièmes informations.

Si le deuxième réseau 10 est connecté au premier réseau 8, et si l'utilisateur émet une requête d'accès à une application distante 42 hébergée sur le premier serveur d'application 12 connecté au premier réseau 8, alors le module maître 4 reçoit la requête d'accès depuis le deuxième réseau 10.

Puis, la première unité de commande 18 du module maître 4 détermine, en fonction des premières informations d'authentification relatives à l'utilisateur, des données de confirmation ou de refus d'accès de l'utilisateur à l'application distante 42.

Puis le module maître 4 transmet les données de confirmation ou de refus d'accès déterminées au premier serveur d'application 12 hébergeant l'application distante 42.

Si le deuxième réseau 10 est connecté au premier réseau 8, et si l'utilisateur émet une requête d'accès à une application externe 50 hébergée sur un troisième réseau 47, alors le module maître 4 reçoit la requête d'accès depuis le deuxième réseau 10.

En outre, la première unité de commande 18 du module maître 4 détermine, en fonction des premières informations d'authentification relatives à l'utilisateur, des données de confirmation ou de refus d'accès de l'utilisateur à l'application externe 50.

Puis la première unité de commande 18 transmet les données de confirmation ou de refus d'accès déterminées vers le troisième serveur d'application 48.

## Revendications

1. Procédé de gestion d'accès d'au moins un utilisateur à au moins une application,
le procédé de gestion d'accès mettant en œuvre un module maître (4) de gestion d'accès connecté à un premier réseau (8) et configuré pour stocker des premières informations d'authentification de chaque utilisateur à chaque application,
le procédé comportant, en réponse à une requête d'accès de l'utilisateur, sur un terminal utilisateur (26) connecté à un deuxième réseau (10) distinct du premier réseau (8), à une application locale (23) hébergée sur un serveur d'application (14) connecté audit deuxième réseau (10) :
- si le deuxième réseau (10) est connecté au premier réseau (8) :
• réception de la requête d'accès par le module maître (4) ;
• détermination, par le module maître (4), en fonction des premières informations d'authentification, de données de confirmation ou de refus d'accès de l'utilisateur à l'application locale (23) ; et
• transmission des données de confirmation ou de refus d'accès déterminées, du module maître (4) vers le serveur d'application (14),
- sinon :
• réception de la requête d'accès par un module satellite (6) se trouvant dans le deuxième réseau (10) et configuré pour stocker des deuxièmes informations d'authentification de chaque utilisateur à chaque application locale ;
• détermination, par le module satellite (6), en fonction des deuxièmes informations d'authentification, de données de confirmation ou de refus d'accès de l'utilisateur à l'application locale (23) ; et
• transmission des données de confirmation ou de refus d'accès déterminées, depuis le module satellite (6) vers le serveur d'application (14).

2. Procédé de gestion d'accès selon la revendication 1, dans lequel la requête d'accès est reçue par le module maître (4) depuis le module satellite (6).

3. Procédé de gestion d'accès selon la revendication 1 ou 2, dans lequel les données de confirmation ou de refus d'accès déterminées par le module maître (4) sont transmises vers le serveur d'application par le module satellite (6).

4. Procédé de gestion d'accès selon l'une quelconque des revendications 1 à 3, comportant, en réponse à une requête d'accès de l'utilisateur, sur le terminal utilisateur (26) connecté au deuxième réseau (10), à une application distante (42) hébergée sur un serveur d'application (12) connecté au premier réseau (8) :
- réception de la requête d'accès par le module maître (4) depuis le deuxième réseau (10) ;
- détermination, par le module maître (4), en fonction des premières informations d'authentification relatives à l'utilisateur, de données de confirmation ou de refus d'accès de l'utilisateur à l'application distante (42) ; et
- transmission des données de confirmation ou de refus d'accès déterminées au serveur d'application (12) hébergeant l'application distante (42).

5. Procédé de gestion d'accès selon l'une quelconque des revendications 1 à 4, comportant, en outre, en réponse à une requête d'accès de l'utilisateur, sur le terminal utilisateur (26) connecté au deuxième réseau (10), à une application externe (50) hébergée sur un serveur d'application (48) connecté à un troisième réseau (47) distinct du premier réseau (8) et du deuxième réseau (10) :
- réception de la requête d'accès par le module maître (4) depuis le deuxième réseau (10) ;
- détermination, par le module maître (4), en fonction des premières informations d'authentification relatives à l'utilisateur, de données de confirmation ou de refus d'accès de l'utilisateur à l'application externe (50) ; et
- transmission des données de confirmation ou de refus d'accès déterminées, depuis le module maître (4) vers le serveur d'application (48) hébergeant l'application externe (50).

6. Procédé de gestion d'accès selon l'une quelconque des revendications 1 à 5, dans lequel le module maître (4) est configuré pour stocker des règles d'harmonisation,
le module satellite (6) étant configuré pour, lors d'une connexion du deuxième réseau (10) au premier réseau (8), transmettre les deuxièmes informations d'authentification correspondantes au module maître (4),
le module maître (4) étant, en outre, configuré pour :
- comparer les deuxièmes informations d'authentification reçues aux premières informations d'authentification courantes ;
- en fonction d'un résultat de la comparaison et des règles d'harmonisation :
• mettre à jour au moins une partie des premières informations d'authentification ; et/ou
• pour au moins un module satellite (6), délivrer des instructions de mise à jour des deuxièmes informations d'authentification.

7. Procédé de gestion d'accès selon l'une quelconque des revendications 1 à 6, dans lequel le module maître (4) est configuré pour, en réponse à une commande de modification des premières informations d'authentification, et lorsque la modification concerne une application locale (23) hébergée sur un serveur d'application (14) connecté au deuxième réseau (10), délivrer des instructions de mise à jour des deuxièmes informations d'authentification correspondantes.

8. Procédé de gestion d'accès selon l'une quelconque des revendications 1 à 7, dans lequel le module maître (4) et le module satellite (6) sont configurés pour chacun afficher, à destination d'un utilisateur pourvu de droits spécifiques, une interface de gestion respective sur le terminal utilisateur (26) correspondant, le module satellite (6) étant, en outre, configuré pour rediriger l'utilisateur vers l'interface de gestion du module maître (4) si le deuxième réseau (10) est connecté au premier réseau (8).

9. Procédé de gestion d'accès selon l'une quelconque des revendications 1 à 8, dans lequel le module maître (4) et le module satellite (6) sont configurés pour communiquer entre eux en mettant en œuvre un protocole de cryptage.

10. Produit programme d'ordinateur comprenant des instructions, qui lorsqu'elles sont exécutées par ordinateur, mettent en œuvre les étapes du procédé selon l'une quelconque des revendications 1 à 9.

11. Système (2) de gestion d'accès d'au moins un utilisateur à au moins une application, le système (2) de gestion d'accès comprenant :
- un module maître (4) de gestion d'accès connecté à un premier réseau (8) et configuré pour stocker des premières informations d'authentification de chaque utilisateur à chaque application ; et
- un module satellite (6) de gestion d'accès se trouvant dans un deuxième réseau (10) distinct du premier réseau (8), et configuré pour stocker des deuxièmes informations d'authentification de chaque utilisateur à chaque application locale hébergée sur un serveur d'application connecté audit deuxième réseau,
le module maître et le module satellite étant configurés de sorte que, en réponse à une requête d'accès de l'utilisateur, sur un terminal utilisateur connecté au deuxième réseau, à une application locale :
- si le deuxième réseau est connecté au premier réseau, le module maître :
• reçoive la requête d'accès ;
• détermine, en fonction des premières informations d'authentification, des données de confirmation ou de refus d'accès de l'utilisateur à l'application locale ; et
• transmette, vers le serveur d'application, les données de confirmation ou de refus d'accès déterminées,
- si le deuxième réseau n'est pas connecté au premier réseau, le module satellite :
• reçoive la requête d'accès ;
• détermine, en fonction des deuxièmes informations d'authentification, des données de confirmation ou de refus d'accès de l'utilisateur à l'application locale ; et
• transmette, vers le serveur d'application, les données de confirmation ou de refus d'accès déterminées.

## Patentansprüche

1. Verfahren zum Verwalten des Zugriffs mindestens eines Benutzers auf mindestens eine Anwendung,
wobei das Zugriffsverwaltungsverfahren ein Master-Zugriffsverwaltungsmodul (4) implementiert, das mit einem ersten Netzwerk (8) verbunden und zum Speichern erster Authentifizierungsinformationen von jedem Benutzer für jede Anwendung konfiguriert ist,
wobei das Verfahren als Reaktion auf eine Anforderung für den Zugriff des Benutzers, auf einem Benutzerendgerät (26), das mit einem zweiten Netzwerk (10) verbunden ist, das sich von dem ersten Netzwerk (8) unterscheidet, auf eine lokale Anwendung (23), die auf einem Anwendungsserver (14) gehostet wird, der mit dem zweiten Netzwerk (10) verbunden ist, vorweist:
- falls das zweite Netzwerk (10) mit dem ersten Netzwerk (8) verbunden ist:
• Empfangen der Zugriffsanforderung durch das Master-Modul (4);
• Bestimmen, durch das Master-Modul (4), in Abhängigkeit von den ersten Authentifizierungsinformationen, von Daten zum Bestätigen oder Verweigern des Zugriffs des Benutzers auf die lokale Anwendung (23); und
• Übermitteln von bestimmten Zugriffsbestätigungs- oder -verweigerungsdaten von dem Master-Modul (4) an den Anwendungsserver (14),
- ansonsten:
• Empfangen der Zugriffsanforderung durch ein Satellitenmodul (6), das sich in dem zweiten Netzwerk (10) befindet und zum Speichern zweiter Authentifizierungsinformationen von jedem Benutzer in jeder lokalen Anwendung konfiguriert ist;
• Bestimmen, durch das Satellitenmodul (6), in Abhängigkeit von den zweiten Authentifizierungsinformationen, von Daten zum Bestätigen oder Verweigern des Zugriffs des Benutzers auf die lokale Anwendung (23); und
• Übermitteln von bestimmten Zugriffsbestätigungs- oder -verweigerungsdaten von dem Satellitenmodul (6) an den Anwendungsserver (14).

2. Zugriffsverwaltungsverfahren nach Anspruch 1, wobei die Zugriffsanforderung durch das Master-Modul (4) von dem Satellitenmodul (6) empfangen wird.

3. Zugriffsverwaltungsverfahren nach Anspruch 1 oder 2, wobei die Zugriffsbestätigungs- oder -verweigerungsdaten, die durch das Master-Modul (4) bestimmt werden, an den Anwendungsserver durch das Satellitenmodul (6) übermittelt werden.

4. Zugriffsverwaltungsverfahren nach einem der Ansprüche 1 bis 3, das als Reaktion auf eine Anforderung für den Zugriff des Benutzers, auf dem Benutzerendgerät (26), das mit dem zweiten Netzwerk (10) verbunden ist, auf eine entfernte Anwendung (42), die auf einem Anwendungsserver (12) gehostet wird, der mit dem ersten Netzwerk (8) verbunden ist, vorweist:
- Empfangen der Zugriffsanforderung durch das Master-Modul (4) von dem zweiten Netzwerk (10);
- Bestimmen, durch das Master-Modul (4), in Abhängigkeit von den ersten Authentifizierungsinformationen bezogen auf den Benutzer, von Daten zum Bestätigen oder Verweigern des Zugriffs des Benutzers auf die entfernte Anwendung (42); und
- Übermitteln der bestimmten Zugriffsbestätigungs- oder -verweigerungsdaten an den Anwendungsserver (12), der die entfernte Anwendung (42) hostet.

5. Zugriffsverwaltungsverfahren nach einem der Ansprüche 1 bis 4, das ferner als Reaktion auf eine Anforderung für den Zugriff des Benutzers, auf dem Benutzerendgerät (26), das mit dem zweiten Netzwerk (10) verbunden ist, auf eine externe Anwendung (50), die auf einem Anwendungsserver (48) gehostet wird, der mit einem dritten Netzwerk (47) verbunden ist, das sich von dem ersten Netzwerk (8) und dem zweiten Netzwerk (10) unterscheidet, vorweist:
- Empfangen der Zugriffsanforderung durch das Master-Modul (4) von dem zweiten Netzwerk (10);
- Bestimmen, durch das Master-Modul (4), in Abhängigkeit von den ersten Authentifizierungsinformationen bezogen auf den Benutzer, von Daten zum Bestätigen oder Verweigern des Zugriffs des Benutzers auf die externe Anwendung (50); und
- Übermitteln bestätigter Zugriffsbestätigungs- oder -verweigerungsdaten von dem Master-Modul (4) an den Anwendungsserver (48), der die externe Anwendung (50) hostet.

6. Zugriffsverwaltungsverfahren nach einem der Ansprüche 1 bis 5, wobei das Master-Modul (4) zum Speichern von Harmonisierungsregeln konfiguriert ist,
wobei das Satellitenmodul (6) bei einer Verbindung des zweiten Netzwerks (10) mit dem ersten Netzwerk (8) zum Übermitteln der entsprechenden zweiten Authentifizierungsinformationen an das Master-Modul (4) konfiguriert ist,
wobei das Master-Modul (4) ferner konfiguriert ist zum:
- Vergleichen der empfangenen zweiten Authentifizierungsinformationen mit den aktuellen ersten Authentifizierungsinformationen;
- in Abhängigkeit von einem Ergebnis des Vergleichens und den Harmonisierungsregeln:
• Aktualisieren von mindestens einem Teil der ersten Authentifizierungsinformationen; und/oder
• Erteilen, für mindestens ein Satellitenmodul (6), von Anweisungen zum Aktualisieren der zweiten Authentifizierungsinformationen.

7. Zugriffsverwaltungsverfahren nach einem der Ansprüche 1 bis 6, wobei das Master-Modul (4) als Reaktion auf einen Modifikationsbefehl der ersten Authentifizierungsinformationen und wenn die Modifikation eine lokale Anwendung (23) betrifft, die auf einem Anwendungsserver (14) gehostet wird, der mit dem zweiten Netzwerk (10) verbunden ist, zum Erteilen von Anweisungen zum Aktualisieren der entsprechenden zweiten Authentifizierungsinformationen konfiguriert ist.

8. Zugriffsverwaltungsverfahren nach einem der Ansprüche 1 bis 7, wobei das Master-Modul (4) und das Satellitenmodul (6) jeweils zum Anzeigen, für einen Benutzer, der mit spezifischen Rechten ausgestattet ist, einer jeweiligen Verwaltungsschnittstelle auf dem entsprechenden Benutzerendgerät (26) konfiguriert sind, wobei das Satellitenmodul (6) ferner zum Weiterleiten des Benutzers zu der Verwaltungsschnittstelle des Master-Moduls (4), falls das zweite Netzwerk (10) mit dem ersten Netzwerk (8) verbunden ist, konfiguriert ist.

9. Zugriffsverwaltungsverfahren nach einem der Ansprüche 1 bis 8, wobei das Master-Modul (4) und das Satellitenmodul (6) zum Kommunizieren miteinander, durch Implementieren eines Verschlüsselungsprotokolls, konfiguriert sind.

10. Computerprogrammprodukt, umfassend Anweisungen, die, wenn sie durch einen Computer ausgeführt werden, die Schritte des Verfahrens nach einem der Ansprüche 1 bis 9 implementieren.

11. System (2) zum Verwalten des Zugriffs mindestens eines Benutzers auf mindestens eine Anwendung, das Zugriffsverwaltungssystem (2) umfassend:
- ein Master-Zugriffsverwaltungsmodul (4), das mit einem ersten Netzwerk (8) verbunden und zum Speichern erster Authentifizierungsinformationen von jedem Benutzer für jede Anwendung konfiguriert ist; und
- ein Satellitenzugriffsverwaltungsmodul (6), das sich in einem zweiten Netzwerk (10) befindet, das sich von dem ersten Netzwerk (8) unterscheidet, und zum Speichern zweiter Authentifizierungsinformationen von jedem Benutzers in jeder lokalen Anwendung konfiguriert ist, die auf einem Anwendungsserver gehostet wird, der mit dem zweiten Netzwerk verbunden ist,
wobei das Master-Modul und das Satellitenmodul derart konfiguriert sind, dass, als Reaktion auf eine Anforderung für den Zugriff des Benutzers, auf einem Benutzerendgerät, das mit dem zweiten Netzwerk verbunden ist, auf eine lokale Anwendung:
- falls das zweite Netzwerk mit dem ersten Netzwerk verbunden ist, das Master-Modul:
• die Zugriffsanforderung empfängt;
• in Abhängigkeit von den ersten Authentifizierungsinformationen Daten zum Bestätigen oder Verweigern des Zugriffs des Benutzers auf die lokale Anwendung bestimmt; und
• die bestimmten Zugriffsbestätigungs- oder -verweigerungsdaten an den Anwendungsserver übermittelt,
- falls das zweite Netzwerk nicht mit dem ersten Netzwerk verbunden ist, das Satellitenmodul:
• die Zugriffsanforderung empfängt;
• in Abhängigkeit von den zweiten Authentifizierungsinformationen Daten zum Bestätigen oder Verweigern des Zugriffs des Benutzers auf die lokale Anwendung bestimmt; und
• die bestimmten Zugriffsbestätigungs- oder -verweigerungsdaten an den Anwendungsserver übermittelt.

## Claims

1. Method for managing access of at least one user to at least one application, the access management method implementing a master access management module (4) connected to a first network (8) and configured to store first authentication information of each user for each application,
the method comprising, in response to a user access request, on a user terminal (26) connected to a second network (10) distinct from the first network (8), to a local application (23) hosted on an application server (14) connected to said second network (10):
- if the second network (10) is connected to the first network (8):
• reception of the access request by the master module (4);
• determination, by the master module (4), based on the first authentication information, of confirmation or refusal data of access by the user to the local application (23); and
• transmission of the determined access confirmation or refusal data from the master module (4) to the application server (14),
- otherwise:
• reception of the access request by a satellite module (6) located in the second network (10) and configured to store second authentication information of each user for each local application;
• determination, by the satellite module (6), based on the second authentication information, of confirmation or refusal data of access by the user to the local application (23); and
• transmission of the determined access confirmation or refusal data from the satellite module (6) to the application server (14).

2. The access management method according to claim 1, wherein the access request is received by the master module (4) from the satellite module (6).

3. The access management method according to claim 1 or 2, wherein the access confirmation or refusal data determined by the master module (4) are transmitted to the application server by the satellite module (6).

4. The access management method according to any one of claims 1 to 3, comprising, in response to a user access request, on the user terminal (26) connected to the second network (10), to a remote application (42) hosted on an application server (12) connected to the first network (8):
- reception of the access request by the master module (4) from the second network (10);
- determination, by the master module (4), based on the first authentication information relating to the user, of confirmation or refusal data of access by the user to the remote application (42); and
- transmission of the determined access confirmation or refusal data to the application server (12) hosting the remote application (42).

5. The access management method according to any one of claims 1 to 4, further comprising, in response to a user access request, on the user terminal (26) connected to the second network (10), to an external application (50) hosted on an application server (48) connected to a third network (47) distinct from the first network (8) and the second network (10):
- reception of the access request by the master module (4) from the second network (10);
- determination, by the master module (4), based on the first authentication information relating to the user, of confirmation or refusal data of access by the user to the external application (50); and
- transmission of the determined access confirmation or refusal data from the master module (4) to the application server (48) hosting the external application (50).

6. The access management method according to any one of claims 1 to 5, wherein the master module (4) is configured to store harmonization rules,
the satellite module (6) being configured to, upon a connection of the second network (10) to the first network (8), transmit the corresponding second authentication information to the master module (4),
the master module (4) being further configured to:
- compare the received second authentication information to the current first authentication information;
- depending on a result of the comparison and on the harmonization rules:
• update at least part of the first authentication information; and/or
• for at least one satellite module (6), issue instructions for updating the second authentication information.

7. The access management method according to any one of claims 1 to 6, wherein the master module (4) is configured to, in response to a command for modifying the first authentication information, and when the modification relates to a local application (23) hosted on an application server (14) connected to the second network (10), deliver instructions for updating the corresponding second authentication information.

8. The access management method according to any one of claims 1 to 7, wherein the master module (4) and the satellite module (6) are each configured to display, to a user provided with specific rights, a respective management interface on the corresponding user terminal (26),
the satellite module (6) being further configured to redirect the user to the management interface of the master module (4) if the second network (10) is connected to the first network (8).

9. The access management method according to any one of claims 1 to 8, wherein the master module (4) and the satellite module (6) are configured to communicate with each other by implementing an encryption protocol.

10. Computer program product comprising instructions, which when executed by computer, implement the steps of the method according to any one of claims 1 to 9.

11. System (2) for managing access of at least one user to at least one application, the access management system (2) comprising:
- an access management master module (4) connected to a first network (8) and configured to store first authentication information of each user to each application; and
- an access management satellite module (6) located in a second network (10) distinct from the first network (8), and configured to store second authentication information of each user to each local application hosted on an application server connected to said second network,
the master module and the satellite module being configured so that, in response to a user access request, on a user terminal connected to the second network, to a local application:
- if the second network is connected to the first network, the master module:
• receives the access request;
• determines, based on the first authentication information, confirmation or refusal data of access by the user to the local application; and
• transmits, to the application server, the determined access confirmation or refusal data,
- if the second network is not connected to the first network, the satellite module, the satellite module:
• receives the access request;
• determines, based on the second authentication information, confirmation or refusal data of access by the user to the local application; and
• transmits, to the application server, the determined access confirmation or refusal data.
